# EUROPEAN PATENT SPECIFICATION

(11) **EP 2 588 788 B1**
(45) Date of publication and mention of the grant of the patent: **26.03.2014**
(21) Application number: 11726213.9
(22) Date of filing: 07.06.2011
(51) Int. Cl.: F16L 3/10

(54) **PIPE CLIP**
ROHRSCHELLE
COLLIER DE FIXATION DE TUYAU

(30) Priority: 19.08.2010 NL 2005248; 01.07.2010 NL 2005012
(43) Date of publication of application: 08.05.2013
(73) Proprietor: J. van Walraven Holding B.V., 3641 RK Mijdrecht (NL)
(72) Inventor: VAN WALRAVEN, Jan, NL-3641 GP Mijdrecht (NL); JUZAK, Marek, NL-3641 ZS Mijdrecht (NL)
(74) Representative: Houben, Christiaan Hein Willem Frans
(86) International application number: PCT/NL2011/050405
(87) International publication number: WO 2012/002803

(56) References cited:
- DE-U1- 20 017 277
- DE-U1- 29 806 640
- DE-U1-202009 004 932

## Description

The present invention relates to a pipe clip according to the preamble of claim 1.

Such a pipe clip is known for example from EP 1195548. The known pipe clip has a second flange with a plastic retaining shoe arranged on it. The retaining shoe comprises a slot, which is arranged in correspondence with the slot in the second flange, and which narrows to a width that is smaller than the diameter of the shank of the screw. The narrowing slot can be expanded upon passing through the shank of the screw.

The present invention has for an object to provide an alternative pipe clip.

This object is achieved by a pipe clip according to claim_1.

According to the invention the barrier member moves in a swivelling manner with the shank of the male fastening member in the introduction direction until the shank passes the barrier member. In particular, the barrier member comprises a leg that swivels upon pressure exerted by the shank of the male fastening member while the latter is moved transverse to the axial direction of the shank into the slot.

The barrier member extends across the introduction portion of the slot, the barrier member in an unloaded state being biased in said position across the introduction portion and, in use - upon introduction of the shank -, said barrier member swivelling away to allow the shank to be inserted into the slot. The barrier member swivels back to the unloaded state when the shank has moved beyond the free end of the barrier member, whereby it blocks again the introduction portion of the slot.

Further preferred embodiments of the pipe clip according to the invention are laid down in the dependent claims.

The invention will be elucidated in the following description with reference to the drawings, in which:

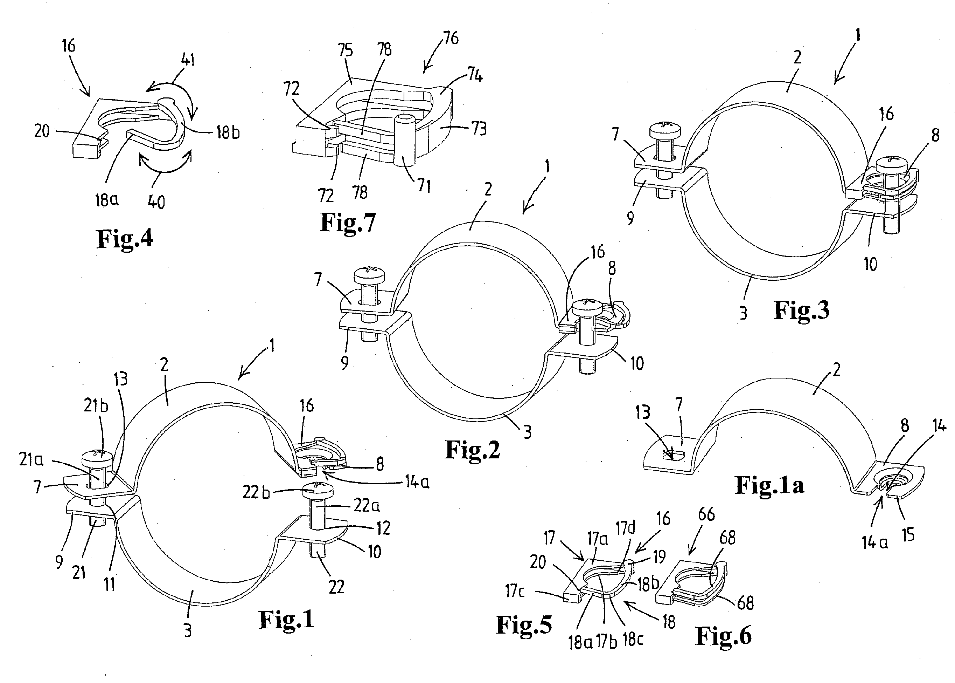

Fig. 1 shows a first preferred embodiment of pipe clip with a retainer element according to the invention in an open state,
Fig. 1 a shows a clip half of the pipe clip of Fig. 1,
Fig. 2 shows the pipe clip of Fig. 1 upon closing,
Fig. 3 shows the pipe clip of Fig. 1 in a closed state,
Fig. 4 illustrates in a perspective view the action of the retainer element of the pipe clip of Fig. 1 during closing of the pipe clip,
Fig. 5 shows in a perspective view the retainer element of Fig. 4 in a closed state,
Fig. 6 shows in a perspective view an alternative retainer element,
Fig. 7 shows in a perspective view yet another alternative retainer element,
Fig. 8 shows a pipe clip half of a pipe clip with another embodiment of a retainer element not according to the invention,
Fig. 9 shows the pipe clip half with the retainer element of Fig. 8 in a disassembled state,
Fig. 10 illustrates an intermediate stage during assembly of the retainer element of Fig. 9 on the pipe clip half,
Fig. 11 illustrates a further intermediate state during assembly of the retainer element of Fig. 9 on the pipe clip half,
Fig. 12 shows a pipe clip with another preferred embodiment according to the invention in an open state,
Fig. 13 shows the pipe clip of Fig. 12 in a closed state, and
Fig 14a-c illustrate the functioning of the retainer element of the pipe clip of Figs 12 and 13.

Figs 1 - 3 show a pipe clip 1. The pipe clip 1 comprises a substantially angular metal clip body which is constituted by two clip halves 2 and 3. The second clip half 3 may have a nut (not shown) attached to the metal clip half body, for coupling the pipe clip to a threaded rod which on its turn is fixed to another support structure, e.g. a wall, a ceiling or a mounting rail. The nut is preferably welded to the clip half 3 which is common in the field of pipe clips.

The first pipe clip half 2 has on one end a radial outwardly extending flange 7 and on the other end a radial outwardly extending flange 8. The second pipe clip half 3 has on one end a radial outwardly extending flange 9, which in a mounted state (see Fig. 3) opposes the flange 7 of the first clip half 2 and on the other end a radial outwardly extending flange 10 which opposes the flange 8 of the first clip half 2.

In the preferred embodiment of the pipe clip shown in Fig.1 the flanges 9 and 10 of the second clip half 3 are each provided with a threaded hole 11 and 12 respectively. In these threaded holes 11 and 12 tightening screws 21 and 22 are screwed in the mounted state of the pipe clip 1.

In the flange 7 of the first clip half 2 an oblong hole 13 is provided, of which the longitudinal axis extends in the radial direction. In use the shank 21 a of the tightening screw 21 connected to the flange 9 of the second clip half 3 extends through the oblong hole 13. When the tightening screw 21 is screwed into the threaded hole 11 in the flange 9, the head 21 b of the screw 21 will eventually engage the upper side of the flange 7 and tighten the two flanges 7 and 9 towards each other. The oblong shape of the hole 13 provides some clearance to allow the manipulation of the first clip halve 2 with respect to the second clip half 3 in order to arrange the pipe clip around a pipe (not shown).

In the other flange 8 of the first clip half 2 a slot 14 is provided. The slot 14 extends substantially in a direction parallel to the axial direction of the pipe clip 1 and is open at one end. The slot opens up at an introduction opening 14a in a lateral edge 15 of the flange 8 (see Fig. 1a). The open end of the slot 14 allows the lateral introduction of a shank of a screw in the slot 14 after the pipe clip 1 has been arranged around a pipe (cf. Figs 2 and 3).

On the flange 8 with the slot 14 a retainer element 16 is arranged. The retainer element 16 in the preferred embodiment is a plastic part which is preferably made by means of injection moulding.

The retainer element 16, which is separately shown in Fig. 5, comprises a shoe 17 with an upper wall 17a and a lower wall 17b. The lower wall 17b is in the assembled state of Figs 1 - 3 located at the side of the flange 8 which faces the flange 10 of the second clip half 3. The upper wall 17a is located at the opposite side of the flange 8. The upper and lower walls 17a, 17b are interconnected at the side edges by side walls 17c, 17d. Thus a sleeve is formed which can be slid over the flange 8 to couple the retainer element 16 with the flange 8 as is shown in Figs 1 - 3.

The retainer element 16 comprises a generally L-shaped member 18 which has a first leg 18a and a second leg 18b. The first leg 18a and second leg 18b are interconnected by an angled portion which forms a resilient hinge 18c between the two legs. The second leg 18b is connected to the shoe 16 by a second hinge 19. The second hinge 19 is a resilient hinge. The second leg 18b extends in the assembled state in the unloaded state along the end edge of the flange 8 and along the slot 14 as can be seen in Figs 1 and 3. The first leg 18a extends transverse thereto and is located across the introduction opening 14a of the slot 14. The first leg 18a constitutes a barrier member that blocks in the assembled state the introduction opening of the slot 14 as can be seen in Figs 1 and 3.

In use - upon introduction of a shank 22a of the screw 22 into the slot 14 (see Fig. 2) - the shank 22a pushes from the outside on the first leg 18a. Thereby the first leg 18a swivels inside as is indicated in Fig. 4 and Fig. 2. This movement is counteracted by the biasing force of the resilient hinge 18c between the first leg 18a and the second leg 18b. In reaction to the deformation of the L-shaped member at the hinge 18c, the second leg 18b is pushed outside which is also indicated in Fig. 4 and Fig. 2. The second leg 18b swivels around the resilient hinge 19. The swivelling movements of the first and second legs 18a and 18b are in opposite direction and are indicated by the double arrows 40 and 41 in Fig. 4. The combined movement of the two legs 18a and 18b results in that the shank 22a of the screw 22 can pass into the slot.

After the shank 22a has passed along the first leg 18a, it will spring back to the unloaded state (Fig. 3) due to the resiliency of the hinges 18c and 19.

The retainer element 16 includes a stop 20 which blocks a swivelling outward movement of the first leg 18a when it is in the unloaded state. The first leg 18a abuts with an end portion this stop 20. Under normal conditions this prevents that the shank 22a can be withdrawn from the slot 14 again.

In Fig. 6 a variation is shown of a retainer element. This retainer element 66 is essentially the same as the retainer element 16 of Fig. 5. However this retainer element 66 has two L-shaped members 68 which are located one above the other, such that in the assembled state, one can move above the flange 8 and the other can move below the flange 8.

In Fig. 7 yet another variation of the retainer element is shown. The retainer element 76 again is essentially the same as the retainer element 16 in Fig. 5. However in this embodiment the retainer element has two barrier members 78, one above the other, which extend across the introduction opening 14a of the slot 14. The barrier members 78 are connected to a common hinge member 71 on one end and abut in an unloaded state a stop 72 with their opposite end. The hinge member 71 is connected to a second leg 73, which at its end remote from the hinge member 71 is connected by a hinge 74 to the shoe 75.

The retainer elements 66 and 76 function essentially the same as the retainer element 16. For a description on their working reference is made to the above description of the retainer element 16.

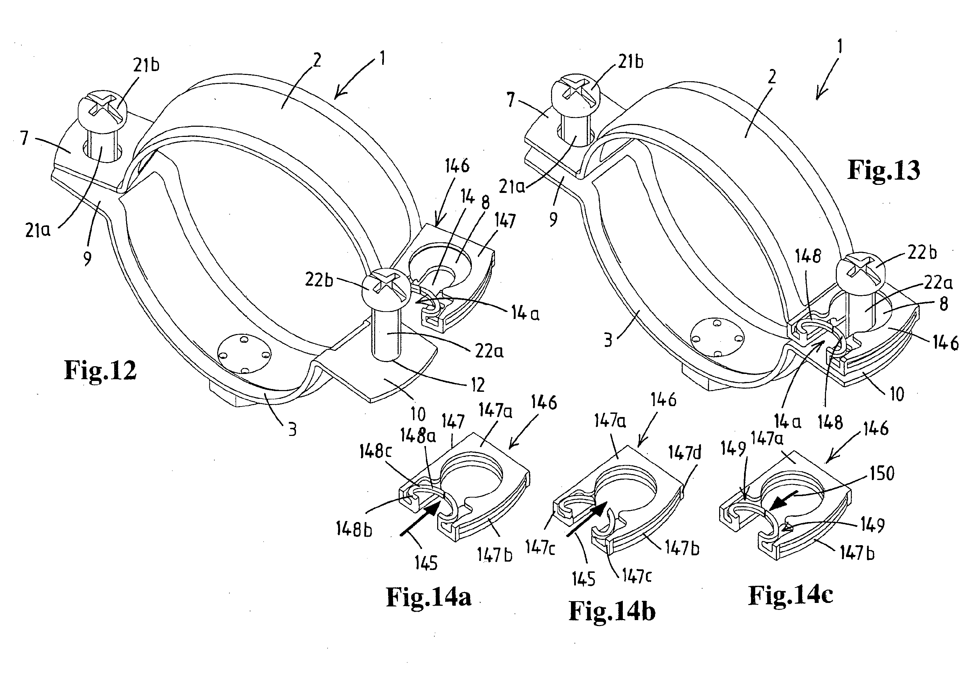

In Figs 12 and 13 is shown another embodiment of a pipe clip according to the invention. For a description of the parts of the pipe clip except for the retainer element, reference is made to the above description.

On the flange 8 with the slot 14 a retainer element 146 is arranged. The retainer element 146 in this preferred embodiment is a plastic part which is preferably made by means of injection moulding.

The retainer element 146, which is separately shown in Figs. 14a-c, comprises a shoe 147 with an upper wall 147a and a lower wall 147b. The lower wall 147b is in the assembled state of Figs 12 and 13 located at the side of the flange 8 which faces the flange 10 of the second clip half 3. The upper wall 147a is located at the opposite side of the flange 8. The upper and lower walls 147a, 147b are interconnected at the side edges by side walls 147c, 147d. Thus a sleeve is formed which can be slided over the flange 8 to couple the retainer element 146 with the flange 8 as is shown in Figs 12 and 13.

The retainer element 146 has two opposing barrier elements 148. The barrier elements 148 are in the shown embodiment lying in the plane of the upper wall 147 a of the shoe. This is however not strictly necessary.

The barrier elements 148 have a curved shape and are generally J-shaped as can be seen in the figures. The J-shape has a longer leg 148a, a shorter leg 148b and a curve portion 148c interconnecting the longer and shorter legs 148a and 148b (see Fig. 14a). The longer legs 148a of the opposing barrier members 148 are curved and at their free ends abut each other in or near the centre of the introduction portion 14a of the slot 14. The longer legs 148a constitute together an arch with a concave side and a convex side. The concave side is facing the open end of the slot 14 as can be seen in Figs 12 and 13.

The end of the shorter leg 148b is connected to the lower wall 147b of the retainer shoe 147. The upper wall 147a of the shoe 147 has on either side of the slot a recess 149 (see Fig. 14c). In the recess 149, the curve portion 148c extends in the unloaded state as is shown in Fig. 14c. Upon introduction of a shank 22a, which is indicated in Figs 14a and 14b by an arrow 145, the longer legs 148a are pushed aside by the shank 22a and swivel out of the way (cf. Fig. 14b). The recesses 149 are such that they allow that the longer legs148a to swivel away, which is clearly visible in Fig. 14b. In Fig. 14b is visible that the longer legs 148a are partly received in the recesses 149.

The introduction of the shank 22a is allowed with low resistance of the barrier elements 148, because when the shank 22a pushes against the concave side of the longer legs 148a, the ends of the respective longer arms 148a will move apart easily. However, when the shank 22a has been introduced in the slot (cf. Fig. 13), and is moved against the barrier elements 148 towards the open end of the slot 14 (indicated by the arrow 150 in Fig. 14c), thus against the convex side of the longer arms 148a, the curved shape of the barrier elements causes that the free ends of the longer legs 148a are forced intitally upon each other. Thereby a greater resistance is created against removal of the shank 22a from the slot 14.

Thus the curved shape provides a barrier structure in which the introduction of the shank 22a into the slot 14 is allowed with low resistance, but once the shank 22a has moved beyond the barrier members 148, the barrier members 148 will retain the shank 22a in the pre-mounting position. In this state a resistance has to be overcome to deform the barrier elements 148 and remove of the shank 22a from the slot 14.

The retainer element 146 is as mentioned, preferably made by injection moulding. The longer legs 148a may be interconnected with each other when just injection moulded. This interconnection may be constituted by a frangible connection that breaks when, in use, a shank is introduced into the slot. It is also possible that, after demoulding, the longer legs 148 are separated by a cutting tool. The cut between the two legs can be in a direction inclined with respect to the longitudinal direction of the slot 14 as is shown in the figures. However this is not strictly necessary.

It is also possible to mould the longer legs separate from each other.

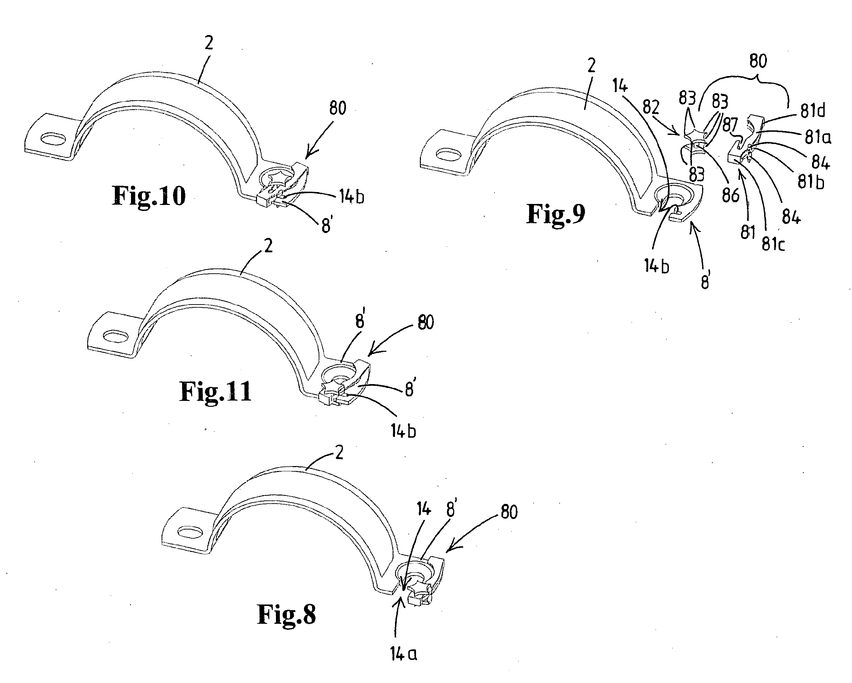

In Figs. 8 and 9 a pipe clip half 2 with a different embodiment of a retainer element, which is not according to the invention is shown. The retainer element is in Figs. 8 and 9 indicated with reference numeral 80. The retainer element 80, which is preferably made of plastics material, comprises a shoe 81 with an upper wall 81 a and a lower wall 81 b. The lower wall 81 b is in the assembled state located at the side of the flange 8' which faces the flange 10 of the second clip half 3. The upper wall 81a is located at the opposite side of the flange 8'. The upper and lower walls 81 a, 81 b are interconnected at the side edges by side walls 81 c, 81d. Thus a sleeve is formed which can be slided over the flange 8' to couple the retainer element 80 with the flange 8' (see also Figs 10 and 11).

The retainer element 80 comprises a turnstile element 82 with a plurality of barrier members 83. The turnstile element 82 comprises a wheel with spoke-like barrier members 83, which are legs that extend radially from a central hub-like portion. The turnstile element 82 is rotatably mounted on the second flange 8' and rotates when the shank 22a of the screw 22 or another male fastening element is pushed against one of the barrier members 83. In the embodiment shown in Fig. 8 the turnstile element 82 has two of such wheels with spoke-like barrier members 83, one on each side of the flange 8'. These wheels are interconnected by a common rotation spindle 86. The rotation spindle 86 extends in the assembled state through recesses 87 in the upper and lower walls 81 a, 81 b of the shoe 81 and through a recess 14b in the flange 8' that adjoins the slot 14. Instead of two wheels it would be conceivable to have only one wheel. Also the shape of the wheels could be different from what is shown in Figs 8-11.

The retainer element 80 comprises one or more latch members 84, which engage the turnstile element 82 and which allow rotation of the turnstile element 82 in one direction, corresponding to the introduction direction of a shank 22a in the slot 14, and block the rotation of the turnstile element 82 in the opposite rotational direction.

Figs 10 and 11 illustrate the assembly of the retainer element 80 on the flange 8' until the assembled state of Fig. 8 is achieved.

## Claims

1. Pipe clip (1) for fastening a pipe to a wall, ceiling or other support surface, the pipe clip (1) comprising a substantially annular pipe clip body which in use surrounds the pipe to be fastened and has a first flange (10) and a second flange (8) which in use are pulled towards each other by means of a male fastening element (22) having a shank (22a) and a head (22b), wherein the first flange (10) is associated with a female fastening means (12) via which the male fastening element (22) is connected to the first flange (10), and wherein the second flange (8) has a slot (14) which has an introduction portion (14a) opening up in a lateral edge (15) of the second flange (8) to laterally receive the shank (22a) of the male fastening element (22), wherein on the second flange (8) a retainer element (16; 76; 146) is arranged, **characterised in that** the retainer element (16; 76; 146) comprises at least one barrier member (18a; 78; 148) which (at least partly) blocks the introduction portion (14a) of the slot (14), said barrier member (18a; 78; 148) being adapted to swivel away when the shank (22a) of the male fastening element (22) is pressed against it upon introduction of the shank (22a) into the slot (14) and to block the introduction portion (14a) of the slot (14) when the shank (22a) has been moved further into the slot (14) in order to retain the shank (22a) in the slot (14), wherein the barrier member (18a; 78; 148) extends across the introduction portion (14a) of the slot (14), the barrier member (18a; 78; 148) in an unloaded state being biased in said position across the introduction portion (14a) of the slot (14) and, in use - upon introduction of the shank (22a) -, said barrier member (18a; 78; 148) swivelling away to allow the shank (22a) to be inserted into the slot (14).

2. Pipe clip according to claim 1, wherein the barrier member (18a; 78) has a resilient biasing hinge (18c; 71;) on one end around which it swivels whereby the barrier member (18a) in an unloaded state is biased to the position across the introduction portion (14a) of the slot (14).

3. Pipe clip according to claim 1, wherein the retainer element (16; 76) comprises an L-shaped member (18) with two legs (18a, 18b; 78, 73), wherein the first leg is the barrier member (18a; 78) and the second leg (18b; 73) extends substantially along the slot (14), wherein a first resilient biasing hinge (18c; 71) is arranged between the first leg (18a; 78) and the second leg (18b; 73) such that the first leg (18a; 78) in an unloaded state is biased in said position across the introduction portion (14a) of the slot (14).

4. Pipe clip according to claim 3, wherein the resilient hinge (18c; 71) between the first and second leg (18a, 18b; 78, 73) is integrally formed with the first leg (18a, 78) and second leg (18b; 73).

5. Pipe clip according to claim 3 or 4, wherein the second leg (18b; 73), at the end remote from the first leg (18a; 78), has a second resilient biasing hinge (19; 74) coupled to the second flange (8), such that in use - when the shank (22a) is inserted into the introduction portion (14a) of the slot (14) - the first leg (18a; 78) swivels in one rotational direction around said first hinge (18c; 71) and the second leg (18b; 73) swivels in an opposite rotational direction relative to said second hinge (19; 74).

6. Pipe clip according to any one of claims 1 - 5, wherein the retainer element (16; 76) comprises a stop (20; 72), wherein the barrier member (18a) abuts the stop (20; 72) in the unloaded state.

7. Pipe clip according to claim 1 or 2, wherein the retainer element (146) comprises two opposing barrier members (148) each extending from one side of the introduction portion (14a) of the slot (14) towards the centre of the introduction portion (14a).

8. Pipe clip according to claim 7, wherein the opposing barrier members (148) abut each other, preferably in approximately the centre of the introduction portion (14a).

9. Pipe clip according to claim 7 or 8, wherein the barrier members (148) lie in a plane substantially parallel to the flange (8) and have a curved shape which defines a convex side and a concave side, wherein the concave side is facing the opening in the lateral side of the second flange (8).

10. Pipe clip according to claim 9, wherein the barrier members (148) are substantially J-shaped, with a longer leg (148a), a shorter leg (148b) and a curve portion (148c) interconnection the shorter leg (148b) and the longer leg (148a), wherein the longer leg (148a) of the J-shape extends over the introduction portion (14a) of the slot (14) and the end of the shorter leg (148b) of the J-shape is attached to the retainer element (146).

11. Pipe clip according to any one of the preceding claims, wherein the retainer element (16; 76; 146) comprises a shoe (17; 75; 147) which is arranged on the second flange (8), wherein the at least one barrier member (18a; 78; 148) is an integral part of the shoe (17; 75; 147).

12. Pipe clip according to claim 11, wherein the shoe (17; 75; 147) comprises an upper wall (17a; 147a) and a lower wall (17b; 147b) which are situated at the opposite sides of the second flange (8), and which upper wall and lower wall are interconnected by one or more side walls (17c, 14d; 147c, 147d), which extend along one or more edges of the second flange.

13. Pipe clip according to claims 10 and 12, wherein the upper wall (147a) of the shoe (147) is provided on either side of the introduction portion (14a) of the slot (14) with a recess (149), wherein the barrier members (148) lie in the plane of said upper wall (147a) and the curve portion (148c) of the J-shape is at least partly located in said recess (149).

14. Pipe clip according to any one of the preceding claims, wherein the retainer element (16; 76; 146) is made of plastics material, preferably injection moulded.

## Patentansprüche

1. Rohrschelle (1) zum Befestigen eines Rohrs an einer Wand, einer Decke oder einer anderen Halterungsfläche, wobei die Rohrschelle (1) einen im Wesentlichen ringförmigen Rohrschellenkörper aufweist, der im Gebrauch das zu befestigende Rohr umgibt und einen ersten Flansch (10) und einen zweiten Flansch (8) hat, die im Gebrauch mittels eines männlichen Befestigungselements (22) mit einem Schaft (22a) und einem Kopf (22b) zueinander hin gezogen sind, wobei der erste Flansch (10) mit einem weiblichen Befestigungselement (12) verbunden ist, über welches das männliche Befestigungselement (22) an den ersten Flansch (10) angeschlossen ist, und wobei der zweite Flansch (8) einen Schlitz (14) hat, der einen Einführungsabschnitt (14a) hat, der sich in einem seitlichen Rand (15) des zweiten Flansches (8) öffnet, um den Schaft (22a) des männlichen Befestigungselements (22) seitlich aufzunehmen, wobei am zweiten Flansch (8) ein Rückhalteelement (16; 76; 146) angeordnet ist, **dadurch gekennzeichnet, dass** das Rückhalteelement (16; 76; 146) mindestens ein Absperrungsteil (18a; 78; 148) aufweist, das (zumindest teilweise) den Einführungsabschnitt (14a) des Schlitzes (14) versperrt, wobei das Absperrungsteil (18a; 78; 148) dazu angepasst ist, wegzuschwenken, wenn der Schaft (22a) des männlichen Befestigungselements (22) beim Einführen des Schafts (22a) in den Schlitz (14) dagegen gedrückt wird, und den Einführungsabschnitt (14a) des Schlitzes (14) zu versperren, wenn sich der Schaft (22a) weiter in den Schlitz (14) hinein bewegt hat, um den Schaft (22a) im Schlitz (14) zurückzuhalten, wobei sich das Absperrungsteil (18a; 78; 148) über den Einführungsabschnitt (14a) des Schlitzes (14) erstreckt, wobei das Absperrungsteil (18a; 78; 148) in einem unbelasteten Zustand in die Position über den Einführungsabschnitt (14a) des Schlitzes (14) vorgespannt wird, und wobei im Gebrauch - beim Einführen des Schafts (22a) - das Absperrungsteil (18a; 78; 148) wegschwenkt, um zu ermöglichen, dass der Schaft (22a) in den Schlitz (14) eingesetzt wird.

2. Rohrschelle nach Anspruch 1, wobei das Absperrungsteil (18a; 78) an einem Ende ein federndes vorspannendes Drehgelenk (18c; 71) hat, um das es schwenkt, wodurch das Absperrungsteil (18a) in einem unbelasteten Zustand in die Position über den Einführungsabschnitt (14a) des Schlitzes (14) vorgespannt wird.

3. Rohrschelle nach Anspruch 1, wobei das Rückhalteelement (16; 76) ein L-förmiges Teil (18) mit zwei Schenkeln (18a, 18b; 78, 73) aufweist, wobei es sich bei dem ersten Schenkel um das Absperrungsteil (18a; 78) handelt und sich der zweite Schenkel (18b; 73) im Wesentlichen entlang des Schlitzes (14) erstreckt, wobei ein erstes federndes vorspannenden Drehgelenk (18c; 71) zwischen dem ersten Schenkel (18a; 78) und dem zweiten Schenkel (18b; 73) so angeordnet ist, dass der erste Schenkel (18a; 78) in einem unbelasteten Zustand in die Position über den Einführungsabschnitt (14a) des Schlitzes (14) vorgespannt wird.

4. Rohrschelle nach Anspruch 3, wobei das federnde Drehgelenk (18c; 71) zwischen dem ersten und zweiten Schenkel (18a, 18b; 78, 73) einstückig mit dem ersten Schenkel (18a, 78) und dem zweiten Schenkel (18b; 73) ausgebildet ist.

5. Rohrschelle nach Anspruch 3 oder 4, wobei der zweite Schenkel (18b; 73) an dem vom ersten Schenkel (18a; 78) fernen Ende ein zweites federndes vorspannendes Drehgelenk (19; 74) hat, das mit dem zweiten Flansch (8) so verbunden ist, dass im Gebrauch - wenn der Schaft (22a) in den Einführungsabschnitt (14a) des Schlitzes (14) eingesetzt wird - der erste Schenkel (18a; 78) in einer Drehrichtung um das erste Drehgelenk (18c; 71) schwenkt und der zweite Schenkel (18b; 73) in einer entgegengesetzten Drehrichtung in Bezug auf das zweite Drehgelenk (19; 74) schwenkt.

6. Rohrschelle nach einem der Ansprüche 1 bis 5, wobei das Rückhalteelement (16; 76) einen Anschlag (20; 72) aufweist, wobei das Absperrungsteil (18a) im unbelasteten Zustand am Anschlag (20; 72) anstößt.

7. Rohrschelle nach Anspruch 1 oder 2, wobei das Rückhalteelement (146) zwei entgegengesetzte Rückhalteteile (148) aufweist, die sich jeweils von einer Seite des Einführungsabschnitts (14a) des Schlitzes (14) zur Mitte des Einführungsabschnitts (14a) hin erstrecken.

8. Rohrschelle nach Anspruch 7, wobei die entgegengesetzten Absperrungsteile (148) in vorzugsweise ungefähr der Mitte des Einführungsabschnitts (14a) aneinander anstoßen.

9. Rohrschelle nach Anspruch 7 oder 8, wobei die Absperrungsteile (148) in einer zum Flansch (8) im Wesentlichen parallelen Ebene liegen und eine gekrümmte Form haben, die eine konvexe Seite und eine konkave Seite bildet, wobei die konkave Seite der Öffnung in der Lateralseite des zweiten Flanschs (8) zugewandt ist.

10. Rohrschelle nach Anspruch 9, wobei die Absperrungsteile (148) im Wesentlichen J-förmig sind, mit einem längeren Schenkel (148a), einem kürzeren Schenkel (148b) und einem gekrümmten Abschnitt (148c), der den kürzeren Schenkel (148b) und den längeren Schenkel (148a) miteinander verbindet, wobei sich der längere Schenkel (148a) der J-Form über den Einführungsabschnitt (14a) des Schlitzes (14) erstreckt und das Ende des kürzeren Schenkels (148b) der J-Form am Rückhalteelement (146) befestigt ist.

11. Rohrschelle nach einem der vorhergehenden Ansprüche, wobei das Rückhalteelement (16; 76; 146) einen Schuh (17; 75; 147) aufweist, der am zweiten Flansch (8) angeordnet ist, wobei das mindestens eine Absperrungsteil (18a; 78; 148) ein integraler Bestandteil des Schuhs (17; 75; 147) ist.

12. Rohrschelle nach Anspruch 11, wobei der Schuh (17; 75; 147) eine obere Wand (17a; 147a) und eine untere Wand (17b; 147b) aufweist, die sich an den entgegengesetzten Seiten des zweiten Flanschs (8) befinden, und diese obere Wand und untere Wand durch eine Seitenwand oder mehrere Seitenwände (17c, 14d; 147c, 147d) miteinander verbunden sind, die sich entlang eines Rands oder mehrerer Ränder des zweiten Flanschs erstrecken.

13. Rohrschelle nach den Ansprüchen 10 und 12, wobei die obere Wand (147a) des Schuhs (147) auf jeder Seite des Einführungsabschnitts (14a) des Schlitzes (14) mit einer Ausnehmung (149) versehen ist, wobei die Absperrungsteile (148) in der Ebene der oberen Wand (147a) liegen und der gekrümmte Abschnitt (148c) der J-Form zumindest teilweise in der Ausnehmung (149) angeordnet ist.

14. Rohrschelle nach einem der vorhergehenden Ansprüche, wobei das Rückhalteelement (16; 76; 146) aus Kunststoffmaterial, vorzugsweise spritzgegossenem Kunststoffmaterial, hergestellt ist.

## Revendications

1. Collier de fixation de tuyau (1) permettant de fixer un tuyau à une surface de mur, de plafond ou d'autre support, le collier de fixation de tuyau (1) comprenant un corps de collier de fixation de tuyau sensiblement annulaire qui en utilisation entoure le tuyau destiné à être fixé et comporte un premier rebord (10) et un deuxième rebord (8) qui, en utilisation sont tirés l'un vers l'autre au moyen d'un dispositif de fixation mâle (22) présentant une tige (22a) et une tête (22b), dans lequel le premier rebord (10) est associé à des moyens de fixation femelle (12) par l'intermédiaire desquels l'élément de fixation mâle (22) est connecté au premier rebord (10), et dans lequel le second rebord (8) présente une fente (14) qui présente une partie d'introduction (14a) s'ouvrant dans un bord latéral (15) du deuxième rebord (8) pour recevoir latéralement la tige (22a) de l'élément de fixation mâle (22), dans lequel, sur le deuxième rebord (8), un élément de retenue (16 ; 76 ; 146) est agencé, **caractérisé en ce que** l'élément de retenue (16 ; 76 ; 146) comprend au moins un élément formant barrière (18a ; 78 ; 148) qui (au moins partiellement) bloque la partie d'introduction (14a) de la fente (14), ledit élément formant barrière (18a ; 78 ; 148) étant apte à pivoter lorsque la tige (22a) de l'élément de fixation mâle (22) est pressée contre lui lors de l'introduction de la tige (22a) dans la fente (14) et à bloquer la partie d'introduction (14a) de la fente (14) lorsque la tige (22a) a été déplacée plus loin dans la fente (14) afin de retenir la tige (22a) dans la fente (14), dans lequel l'élément formant barrière (18a ; 78 ; 148) s'étend au travers de la partie d'introduction (14a) de la fente (14), l'élément formant barrière (18a ; 78 ; 148) dans un état non chargé étant décalé dans ladite position au travers de la partie d'introduction (14a) de la fente (14) et, en utilisation, lors de l'introduction de la tige (22a), ledit élément formant barrière (18a ; 78, 148) pivotant pour permettre à la tige (22a) d'être insérée dans la fente (14).

2. Collier de fixation de tuyau selon la revendication 1, dans lequel l'élément formant barrière (18a, 18) présente une articulation de contrainte élastique (18c ; 71) à une extrémité autour de laquelle il pivote de sorte que l'élément formant barrière (18a) dans un état non chargé est containt vers la position au travers de la partie d'introduction (14a) de la fente (14).

3. Collier de fixation de tuyau selon la revendication 1, dans lequel l'élément de retenue (16 ; 76) comprend un élément en forme de L (18) avec deux branches (18a, 18b ; 78, 73), dans lequel la première branche est l'élément formant barrière (18a ; 78) et la deuxième branche (18b ; 73) s'étend sensiblement le long de la fente (14), dans lequel une première articulation de contrainte élastique (18c ; 71) est disposée entre la première branche (18a ; 78) et la deuxième branche (18b ; 73) de telle sorte que la première branche (18a ; 78) dans un état non chargé est contrainte dans ladite position au travers de la partie d'introduction (14a) de la fente (14).

4. Collier de fixation de tuyau selon la revendication 3, dans laquelle l'articulation élastique (18c ; 71) entre la première et la deuxième branche (18a, 18b ; 78, 73) est formée d'un seul tenant avec la première branche (18a ; 78) et la deuxième branche (18b ; 73).

5. Collier de fixation de tuyau selon la revendication 3 ou 4, dans lequel la deuxième branche (18b ; 73), au niveau de l'extrémité éloignée de la première branche (18a ; 78), présente une deuxième articulation de contrainte élastique (19 ; 74) couplée au deuxième rebord (8), de sorte qu'en utilisation, lorsque la tige (22a) est insérée dans la partie d'introduction (14a) de la fente (14), la première branche (18a ; 78) pivote dans une direction de rotation autour de ladite première articulation (18c ; 71) et la deuxième branche (18b ; 73) pivote dans un sens de rotation opposé par rapport à ladite deuxième articulation (19 ; 74).

6. Collier de fixation de tuyau selon l'une quelconque et des revendications 1 à 5, dans lequel l'élément de retenue (16 ; 76) comporte une butée (20 ; 72), dans lequel l'élément formant barrière (18a) vient en butée contre la butée (20 ; 72) dans l'état non chargé.

7. Collier de fixation de tuyau selon la revendication 1 ou 2, dans lequel l'élément de retenue (146) comprend deux éléments formant barrières (148) opposés s'étendant chacun depuis un côté de la partie d'introduction (14a) de la fente (14) en direction du centre de la partie d'introduction (14a).

8. Collier de fixation de tuyau selon la revendication 7, dans lequel les éléments formant barrière (148) opposés viennent en butée l'un sur l'autre, de préférence à peu près au centre de la partie d'introduction (14a).

9. Collier de fixation de tuyau selon la revendication 7 ou 8, dans lequel les éléments formant barrière (148) se trouvent dans un plan sensiblement parallèle au rebord (8) et présentent une forme incurvée qui définit un côté convexe et un côté concave, dans lequel le côté concave fait face à l'ouverture ménagée dans le côté latéral du deuxième rebord (8).

10. Collier de fixation de tuyau selon la revendication 9, dans lequel les éléments formant barrière (148) sont sensiblement en forme de J, avec une branche plus longue (148a), une branche plus courte (148b) et une partie de courbe (148c) reliant la branche plus courte (148b) et la branche plus longue (148a), dans lequel la branche plus longue (148a) de la forme en J s'étend sur la partie d'introduction (14a) de la fente (14) et l'extrémité de la branche courte (148b) de la forme en J est reliée à l'élément de retenue (146).

11. Collier de fixation de tuyau selon l'une quelconque des revendications précédentes, dans lequel l'élément de retenue (16 ; 76 ; 146) comprend un sabot (17 ; 75 ; 147) qui est agencé sur le deuxième rebord (8), dans lequel ledit au moins un élément formant barrière (18a ; 78 ; 148) est une partie intégrante du sabot (17 ; 75 ; 147).

12. Collier de fixation de tuyau selon la revendication 11, dans lequel le sabot (17 ; 75 ; 147) comprend une paroi supérieure (17a ; 147a) et une paroi inférieure (17b ; 147b) qui sont situées sur les côtés opposés du deuxième rebord (8), et dont la paroi supérieure et la paroi inférieure sont reliées entre elles par une ou plusieurs parois latérales (17c ; 14d ; 147c ; 147d) qui s'étendent le long d'une ou de plusieurs bords de la deuxième bride.

13. Collier de fixation de tuyau selon les revendications 10 et 12, dans lequel la paroi supérieure (147a) du sabot (147) est munie sur chaque côté de la partie d'introduction (14a) de la fente (14) d'un évidement (149), dans lequel les éléments formant barrière (148) se trouvent dans le plan de ladite paroi supérieure (147a) et la partie de courbe (148c) de la forme en J est située au moins partiellement dans ledit évidement (149).

14. Collier de fixation de tuyau selon l'une quelconque des revendications précédentes, dans lequel l'élément de retenue (16 ; 76 ; 146) est fait de matière plastique, de préférence moulé par injection.
